# EUROPEAN PATENT SPECIFICATION

(11) **EP 2 132 063 B1**
(45) Date of publication and mention of the grant of the patent: **31.07.2013**
(21) Application number: 08716599.9
(22) Date of filing: 18.03.2008
(51) Int. Cl.: B60R 21/239, B60R 21/231

(54) **AIRBAG FOR PROTECTION OF A VEHICLE OCCUPANT**
AIRBAG ZUM SCHUTZ EINES FAHRZEUGINSASSEN
COUSSIN DE SÉCURITÉ GONFLABLE DESTINÉ À PROTÉGER L'OCCUPANT D'UN VÉHICULE

(30) Priority: 09.04.2007 US 784594; 25.05.2007 US 753822
(43) Date of publication of application: 16.12.2009
(73) Proprietor: Autoliv Development AB, 447 83 Vårgårda (SE); Autoliv ASP, Inc., Ogden, Utah 84405 (US)
(72) Inventor: SANDWALL, Erik, S-441 35 Alingsas (SE); ÖHRVALL, Henrik, S-26900 Bastad (SE); BÖRJESON, Gustav, S-441 35 Alingsas (SE); MUELLER, Louis, Roy, UT 84067 (US)
(74) Representative: Koch, Henning
(86) International application number: PCT/EP2008/002139
(87) International publication number: WO 2008/122346

(56) References cited:
- WO-A-2006/073534
- WO-A-2007/009427
- WO-A1-00/46076
- JP-A- 7 329 694
- US-A- 5 931 497
- US-A1- 2004 017 069
- US-A1- 2004 090 054
- US-A1- 2005 236 822

## Description

### BACKGROUND OF THE INVENTION

### 1. Field of Invention

The invention generally relates to a vehicular safety restraint system and more particularly to a side airbag which can protect an occupant during a vehicle collision. 2. Background

Many inventions dealing with airbag systems have been proposed. These systems generally comprise an inflator and an airbag. The airbag is installed prior to inflation in a compact folded or rolled condition. Upon sensing the occurrence of an impact collision via various sensors, such as for example, in a side impact collision with a vehicle having a side airbag system, a vehicle mounted crash sensor or accelerometer generates a control signal. The control signal causes the inflator to be activated, thereby producing or releasing inflation gas. The inflation gas inflates the airbag. Ideally, a side impact airbag is positioned between the side of the occupant and an adjacent side of the vehicle to adequately protect the occupant. However, during operation of the vehicle an occupant may be positioned in an out-of-normal-seating position which is sometimes referred to as out-of-position (OOP). As an example, one such out-of-position seating orientation might include a child resting within the corner formed by the outer edge of the seat and the adjacent side of the vehicle. Ideally the inflating airbag should accommodate an out-of-position occupant.

WO2007/009427 and US2004/017069 both disclose airbag systems with airbags having at least one airbag chamber with a vent opening in the airbag wall. A flat strap covers the vent opening on the inner side thereof. The strap has an opening which is aligned with the vent opening in the airbag wall in the folded condition of the airbag. Depending on the state of deployment of the airbag the strap can be displaced relative to the vent opening and can therewith open or close the vent opening.

Also from WO2006/073534 it is known to provide an airbag with an adaptive vent opening which is open in the folded condition and which can be closed by a strap which is sliding in relation to the airbag wall and, wherein an opening in the strap is moving from an aligned position with the vent opening to a misaligned position in order to close the vent opening. The airbag is further provided with additional vent openings which are constantly open.

US2005/236822 shows an airbag with a vent opening which can be closed by a fabric sheet. In the folded configuration the vent opening is unobstructed and the sheet is secured by beneath the vent opening. As the fabric sheet is connected to an inner strap, the sheet is released on full airbag deployment by the tensioned strap and the vent opening is obstructed by the sheet. The airbag is further provided with additional vent openings which stay constantly open.

WO00/46076 discloses a side airbag with two chambers with an inflatable tube being located inside the side airbag in vertical orientation along the rearward edge. Such inflatable tube is inflated by a gas generator and is moving the side airbag into position very swiftly. The tube is provided with outflow openings which guide the gas from the tube into both side airbag chambers.

The present invention provides a new and improved side airbag for protection of the vehicle occupant during an impact collision which accounts for an out-of-position occupant during inflation of the airbag.

### BRIEF SUMMARY OF THE INVENTION

The present invention provides a side airbag for protection of a vehicle occupant according to the claims 1 to 12 and a side airbag system for protection of an occupant of a vehicle that is mounted in a seat for the occupant according to claim 13.

### BRIEF DESCRIPTION OF THE DRAWINGS

Figure 1 is a side view of a vehicle occupant in a vehicle compartment;

Figure 2 is a perspective view of a side airbag system in accordance with an embodiment of the present invention;

Figure 3 is a side view of a side airbag system in accordance with an embodiment of the present invention;

Figures 4a and 4b are cross sectional views of an airbag system in accordance with an embodiment of the present invention;

Figures 5a and 5b are cross sectional views of an airbag system in accordance with an embodiment of the present invention;

Figures 6a and 6b are cross sectional views of an airbag system in accordance with an embodiment of the present invention;

Figures 7a and 7b are side views of an airbag system in accordance with an embodiment of the present invention;

Figure 8 is a side view of a side airbag system in accordance with state of the art;

Figures 9a and 9b are side views of an airbag system in accordance with state of the art;

Figures 10a and 10b are side views of an airbag system in accordance with state of the art;

Figure 11a is a side view of an airbag system in accordance with state of the art,

Figures 11b - 11c are side views of airbag systems in accordance with various embodiments of the present invention; and

Figures 12a - 12e are plan views of various folding arrangements of the airbag system in a deflated condition in accordance with embodiments of the present invention.

Further objects, features and advantages of the invention will become apparent from consideration of the following description and the appended claims when taken in connection with the accompanying drawings.

### DETAILED DESCRIPTION OF THE INVENTION

Detailed embodiments of the present invention are disclosed herein. It is understood however, that the disclosed embodiments are merely exemplary of the invention and may be embodied in various and alternative forms. The figures are not necessarily to scale, some figures may be exaggerated or minimized to show the details of a particular component. Therefore, specific structural and functional details disclosed herein are not to be interpreted as limiting but merely as a representative basis of the claims and for teaching one skilled in the art to practice the present invention.

The present invention seeks to overcome some of the concerns associated with protection of a vehicle occupant via an airbag while allowing for the possibility of the occupant being out-of-position (OOP).

Employing the principles of the present invention is an airbag including a venting system. The airbag is part of a side airbag system. The venting system vents gas generated from an airbag inflator through a vent opening in the airbag during deployment or airbag inflation. When the airbag becomes substantially fully inflated, the venting system, acting as a closing or closed valve, obstructs the opening, such that the gas is substantially not vented through the vent opening. Thus, the gas, which may still be generating from the inflator, is substantially maintained within the airbag to more fully inflate the airbag and to absorb energy from the impact. Preferably, when the occupant is in a normal seating position, the deploying airbag becomes substantially fully inflated and the venting system obstructs the vent opening such that the inflation gas is confined within the airbag, increasing the internal airbag pressure, so as to fully inflate the airbag. Alternatively, if the occupant is out-of-position, such as being positioned too close to the airbag, the deploying airbag is prevented from becoming substantially inflated because the occupant's body blocks or obstructs the expansion of the airbag. In this situation, the venting system remains unobstructed, acting as an open valve, continues to vent the generating gas from the inflator through the opening to outside the airbag so as to continuously relieve the internal pressure of the airbag. Accordingly, obstruction of the vent hole substantially decreases the degree of venting of the gas through relative to the vent hole being unobstructed.

In at least one embodiment, the venting system is used for a side airbag system which includes protection for the occupant's thorax area. The side airbag system, after breaking free from the occupant's seat, extends generally upwardly, as in the case of telescoping pole, and behind the occupant. The remaining portion of the airbag or cushion unfolds forwardly as would be the case with a flag. In the event that the occupant is out-of-position, the airbag or cushion may be impeded from unfolding forward. In such an event, the venting system would continue to vent gas from inside the airbag to outside the airbag. However, in the case where the occupant is in a normal position, the airbag or cushion would be allowed to unfold forwardly and the venting system would become obstructed as the airbag deploys so as to substantially not vent the gas from the airbag so that preferably the airbag becomes entirely inflated with the gas.

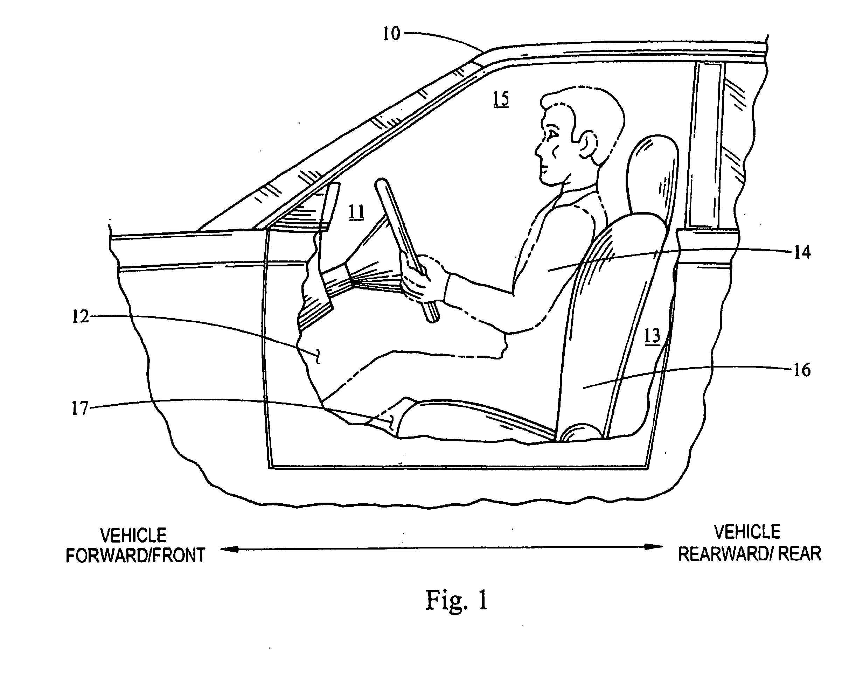

Referring now to the drawings, Figure 1 illustrates a motor vehicle 10 having an front occupant compartment 12 in which an occupant 14 is seated in a seat 16. An airbag (not shown) of flexible fabric may be mounted, for example, in the seat 16 and receives inflation gas from an inflator (not shown). The occupant compartment 12 has generally a forward area 11 positioned towards the front of the vehicle 10, a rearward area 13 positioned towards the rear of the vehicle 10, an upward area 15 positioned towards the top of the vehicle, and a lower area 17 positioned towards the bottom of the vehicle.

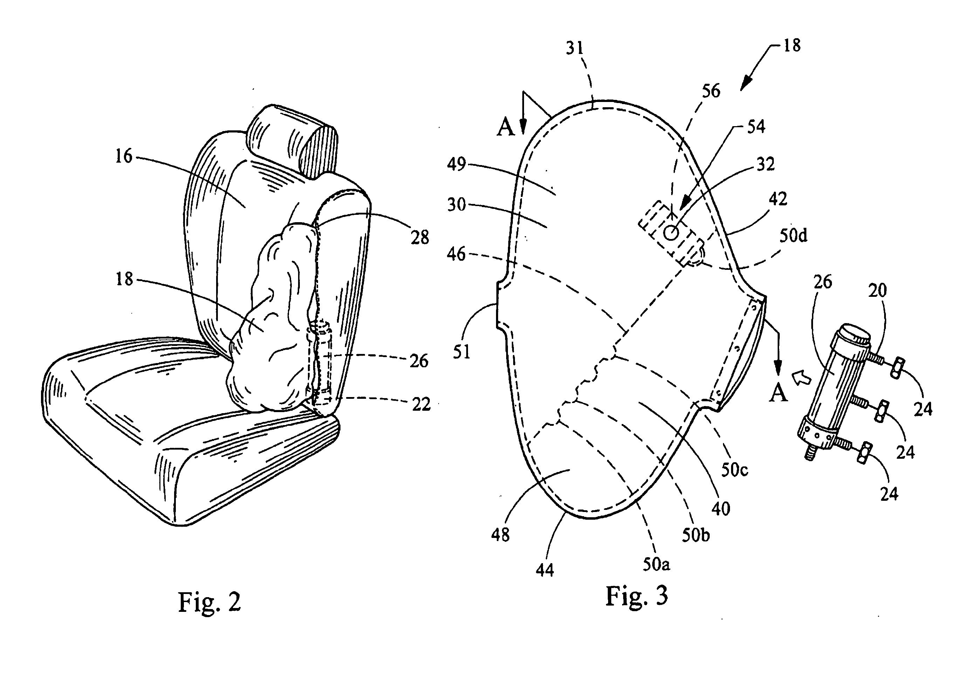

Referring to Figure 2, an airbag employing the principles of the present invention is illustrated therein and designated at 18. The airbag 18 is shown in a partially inflated condition as it emerges from the vehicle seat 16. Mounting studs 20 (shown in Figure 3) of the inflator 26 may be secured to a frame 22 of the seat 16 by fasteners 24 (shown in Figure 3). Prior to activation of the inflator 26, the airbag 18 is folded or rolled into a compact configuration about the inflator 26 within the seatback and covered typically by foam and an exterior covering trim material of the seat 16.

The inflator 26 may be secured directly to the mounting frame 22 of the vehicle seat 16 or installed within a housing. The airbag 18 may be situated behind an outboard seam 28 of the seat 16 such that upon inflation of the airbag 18, the inflating airbag 18 bursts through the seam 28. As the airbag 18 continues to inflate, the airbag 18 is positioned between the side of the occupant 14 and the immediately adjacent side of the vehicle 10.

Figure 3 illustrates a side view of an airbag system in an accordance of an embodiment of the present invention. The airbag 18 comprises a side panel 30 that forms an exterior of the airbag 18 and defines a vent hole 32. The side panel may be a single fabric type panel or a plurality of panels joined together, for example by a sewn seam or seams 31. The airbag 18 may be for protection of the occupant's thorax area and/or head area and/or pelvis area and accordingly may have corresponding chambers which function to absorb impact energy specific to these areas.

The airbag 18 may include a rear chamber 40 which generally extends substantially from the top 42 to the bottom 44 of the airbag 18 and is formed by a tube panel 46 forming a tube 48. The tube panel 46 further segments the airbag 18 so as to form a forward chamber 49 which may also be referred to as a cushion or cushion portion of the airbag 18. The inflator 26 may be positioned within a portion of the tube 48, such as for example, a rear central portion and the studs 20 of the inflator 26 may be inserted through corresponding holes defined in the airbag 18 such that a receiving inlet into the rear central portion becomes closed. The tube panel 46 may include a vent or a plurality of vents or openings 50a, 50b, 50c, and 50d for communication of the gas from the inflator 26 to the forward chamber 49. In one embodiment, the tube panel 46 includes a large vent 50b, a smaller vent 50c, an upper vent 50d and a lower vent 50a. In another embodiment, the tube panel 46 may be positioned at an incline such that the tube 48 is larger at the bottom than at the top so as to bias the volume of the gas from the inflator 26 to a lower rearward portion of the tube 48.

In at least one embodiment, the inflator 26 communicates the gas to the tube 48 which further communicates the gas to the forward chamber 49. During inflation of the airbag 18, the venting system 54, which includes the vent hole 32 and a closing panel 56, is configured such that the vent hole 32 is unobstructed and vents the gas to outside the airbag 18. When the airbag 18 is substantially fully inflated, the side and closing panels 30, 56 cooperate to obstruct the vent hole 32 with the closing panel 56 such that the gas is substantially not vented and the airbag 18 fully inflates and maintains internal gas pressure longer than airbag 18 when vent hole 32 is opened.

In one embodiment, the side panel 30 defines a second vent hole 51 which may be disposed adjacent the forward chamber 49 and preferably positioned peripherally so as to vent the gas in a direction away from the occupant 14. For example, the second vent hole 51 may be positioned along a forward peripherally edge of the airbag 18 so as to vent the gas in a forwardly direction. The second vent hole 51 preferably is unobstructed and remains open during full deployment and functions to manage and absorb energy from the impact.

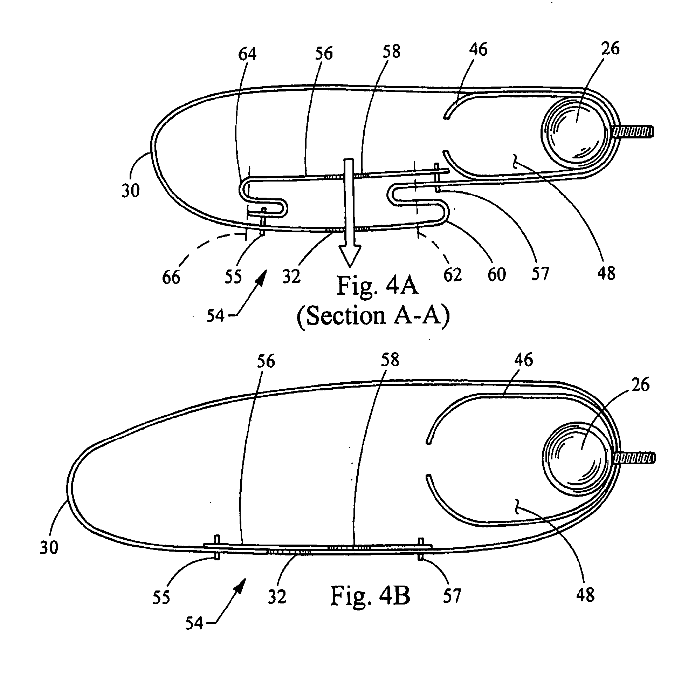

Figure 4a and Figure 4b illustrate a sectional view of an embodiment of the venting system 54 generally indicated in Figure 3. The closing panel 56 is disposed about the vent hole 32. For example, the closing panel 56 may be joined to the side panel 30 at two or more opposed locations 55, 57 about the vent hole 32. In one embodiment, the closing panel 56 is sewn to the side panel 30 to form two or more seams disposed about the vent hole 32. Other suitable means for joining two airbag fabric panels know to those skilled in the art may also be used. In at least one embodiment, the seams at the opposed locations 55, 57 endure full inflation of the airbag 18 without rupturing.

An inner hole 58 is defined by the closing panel 56. The vent hole 32 is unobstructed to vent gas when the inner hole 58 is aligned with the vent hole 32. The side panel 30 has a first stored portion 60 that may be, for example, comprised of folded fabric, which is sewn together to itself or sewn together with the closing panel 56 to form a first nest seam 62. The nest seam 62 facilitates maintaining the stored portion 60 in a folded or rolled arrangement during storage and initial deployment of the airbag 18, which is generally the case for all other nest seams and storage portions discussed herein. The closing panel 56 has a second stored portion 64 that may also be comprised of folded fabric, which is sewn together to itself or sewn together with the side panel 30 to form the second nest seam 66. The first and second stored portions 60, 64 are for movement of a closing panel 56 across the vent hole 32. The side and closing panels 30, 56 are configured to rupture the first and second nest seams 62, 66 when the airbag 18 is substantially fully inflated. In at least one embodiment, the airbag unfolds and the panels 30, 56 cooperate to stretch the panel portions 30, 56 between the opposed location 55, 57, thereby stressing the nest seams 62, 64 beyond their ultimate strength. Upon rupturing of the nest seams 62, 66, the side and closing panels 30, 56 move relative to one another such that the vent hole 32 and the inner hole 58 are misaligned and the vent hole 32 is covered by the closing panel 56. Preferably, the length of the side and closing panels 30, 56 disposed between the opposed locations 55, 57, with the stored portions 60, 64 unfolded, are substantially equivalent when the airbag is fully inflated.

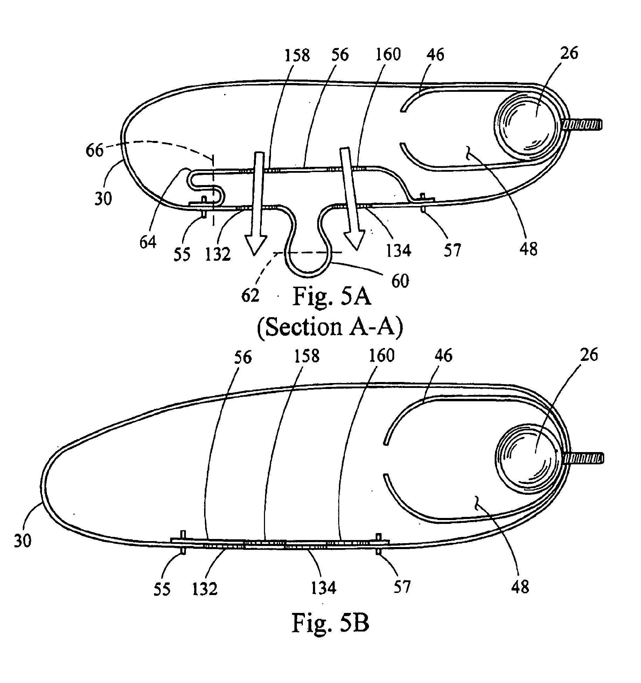

Figures 5a and 5b illustrate a sectional view of another embodiment of the venting system 54 generally indicated in Figure 3. The side panel 30 defines a first vent hole 132 and a second vent hole 134. A first inner hole 158 and a second inner hole 160 are defined by the closing panel. The vent holes 132, 134 are unobstructed when the inner holes 158, 160 are matched and aligned with the vent holes 132, 134. The side panel 30 and the closing panel 56 may each have stored portions 60, 64 for movement of the vent holes 132, 134 relative to the closing panel 56. The stored portions 60, 64 may be sewn in a folded arrangement to form corresponding nest seams 62, 66 respectively. The side and closing panels 30, 56 are configured to rupture the nest seams 62, 66 when the airbag 18 is substantially fully inflated and move the vent holes 132, 134 relative to the closing panel, thereby misaligning the holes 132, 134, 158, 160, and thus obstructing the vent holes 132, 134 with the closing panel 56.

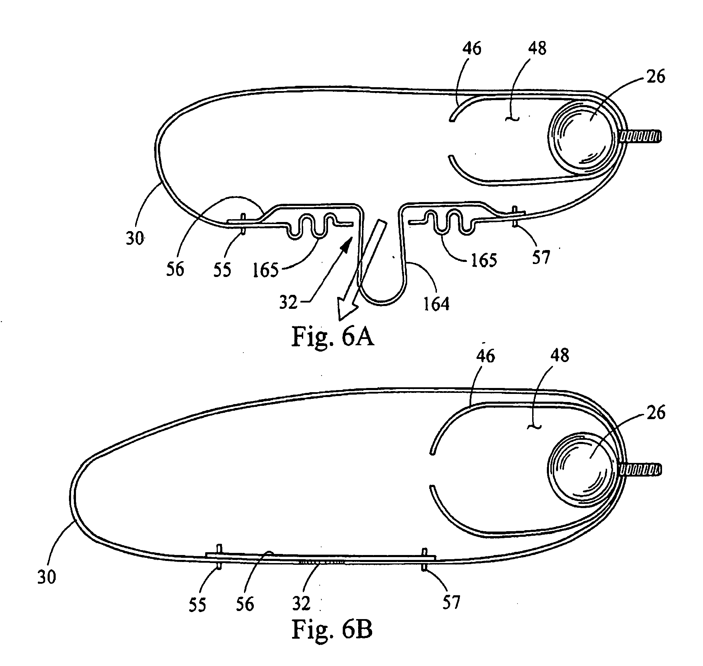

Figures 6a and 6b illustrate a sectional view of another embodiment of the venting system 54 generally indicated in Figure 3. The vent hole 32 is unobstructed with a stored portion 164 of the closing panel 56 disposed through and extends outwardly from the vent hole 32 such that there is a vent path for the gas through the vent hole 32 and above and/or below the stored portion 164. That is, the closing panel 56 has for example, a shape corresponding to a strip which extends through the vent hole 32 and is looped to allow the gas to vent below and/or above the strip in the space created by the loop. Here, the stored portion 164 may or may not have a nest seam. The stored portion 164 of the closing panel 56 is for moving across the vent hole 32. The side and closing panels 30, 56 are configured to move the stored portion 164 of the closing panel 56 inwardly through and across the vent hole 32 when the airbag 18 is substantially inflated so as to obstruct the vent hole 32. The side panel 30 may also have a stored portion or portions 165 which also may or may not have nest seams. The stored portion 165 of the side panel 30 may be disposed about the vent hole 32 and is for facilitating movement of the stored portion 164 of the closing panel 56 inwardly through and across the vent hole 32.

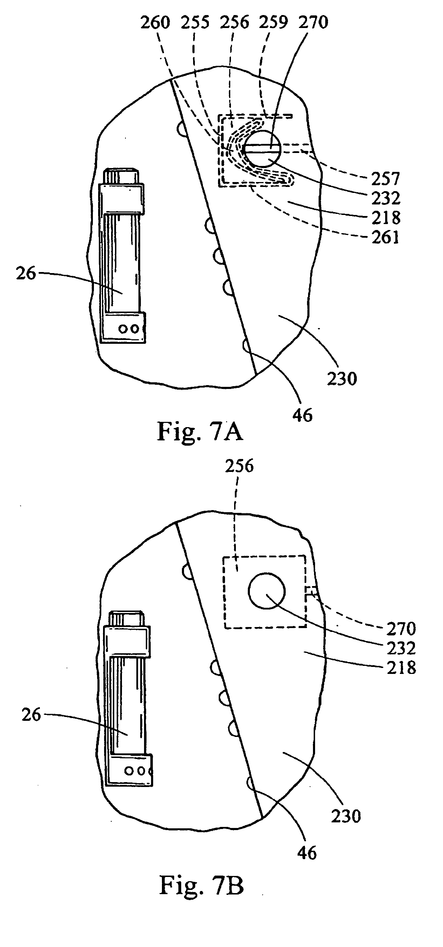

Figures 7a and 7b are side views of another embodiment of a venting system for an airbag in accordance with the present invention. The airbag 218 includes a side panel 230 forming an exterior of the airbag 218. A vent hole 232 is defined by the side panel 230. Joined to the side panel 230 at a plurality of opposed locations 255, 257, 259, 261 disposed about the vent hole 232 is a closing panel 256. The closing panel 256 has a stored portion 260 for movement across the vent hole 232 and includes a strap 270 having a first end 272 joined to the stored portion 260 of the closing panel 256 and a second end 274 joined to the side panel 230. The stored portion 260 is either rolled or folded fabric, which may or may not have a nest seam. The second end 274 is operable to actuate the strap 270 and move the stored portion 260 of the closing panel 256 across the vent hole 232 when the airbag 218 is substantially fully inflated so as to obstruct the vent hole 232.

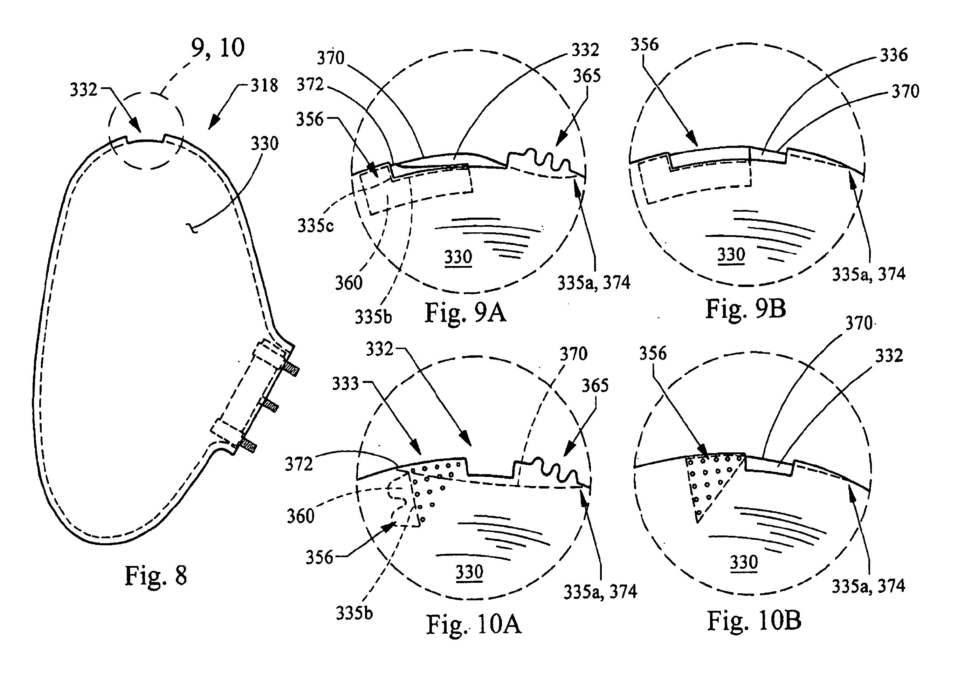

Figure 8 illustrates a side view of an airbag system in accordance with state of the art. The airbag 318 may or may not include tube panel 46. The side panel 330 of the airbag 318 defines a vent hole 332 with a vent system which functions similar to the vent system illustrated in Figures 7a and 7b with the difference that the vent hole 332 is located in the periphery area of the side airbag 318.

Referring to Figures 9a - 10b, various examples of state of the art - which do not belong to the invention - of the vent system depicted in Figure 8 are provided. Joined to the side panel 330 at a plurality of opposed locations 335a - 335c disposed about the vent hole 332 (Figures 9a - 9b) or plurality of vent holes 332, 333 (Figures 10a - 10b) is a closing panel 356. The closing panel 356 has a stored portion 360 for movement across the vent hole 332 or vent holes 332, 333 and includes a strap 370 having a first end 372 joined to the stored portion 360 of the closing panel 356 and a second end 374 joined to the side panel 330. The stored portion 360 is either rolled or folded fabric, which may or may not have a nest seam. The second end 374 is operable to actuate the strap 370 and move the stored portion 360 of the closing panel 356 across the vent hole 332 or holes 332, 333 when the airbag 318 is substantially fully inflated so as to substantially obstruct venting of the gas. Specifically, in Figure 9a and 9b the vent hole 332 is preferably a large vent hole which becomes obstructed by covering a significant portion of the vent hole 332 so as to define a smaller vent hole 336. In Figures 10a and 10b a portion of the total number of vent holes 332, 333 are covered such that at least one vent hole 333 is obstructed and at least another of the vent holes 332 is unobstructed. In one further example, the hole 332 which remains unobstructed is larger than any one of a plurality of obstructed holes 333. The smaller vent hole 336 and/or covering of the portion of vent holes 332, 333 reduces the size of the original vent hole opening or openings that functions for an OOP occupant to a size that functions to absorb energy during a impact event of a normally positioned occupant during full airbag deployment.

The side panel 330 may also have a stored portion or portions 365 which may or may not have nest seams. The stored portion 365 may be disposed about the vent hole 332 or vent holes 332, 333 and is for facilitating actuation of the strap 370 via the second end 374 which is preferably joined about the stored portion 365.

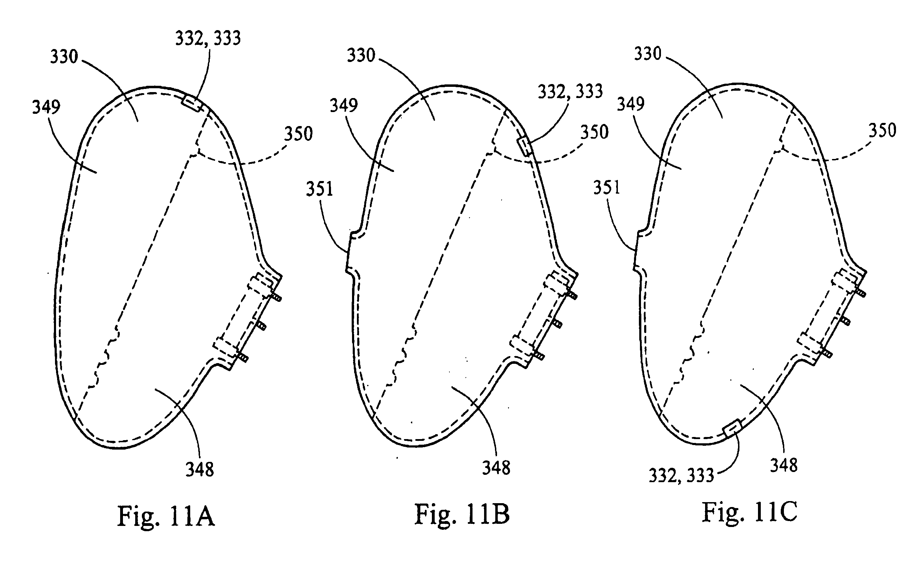

Figures 11a - 11c are side views of the venting system, wherein figure 11 a shows background art which does not belong to the invention, while figures 11 b and 11c show embodiments in accordance with the present invention. The vent hole 332 or holes 332, 333 may be disposed adjacent to the tube 348 as illustrated in Figures 11b and 11c, in which the gas is able to exit the side airbag even before flowing into the forward chamber 349. In these alternatives it is preferable to provide a second vent 351 to absorb the energy during an impact event of a normally positioned occupant during full airbag deployment. Alternatively, the vent hole 332 or holes 332, 333 may be disposed adjacent to the forward chamber 349 and further, may be adjacent an outlet opening 350 that is for fluid communication between the tube 348 and the forward chamber 349. As background art, the vent hole 332 or holes 332, 333 are positioned along a periphery of the airbag 330 such that when the airbag 330 is inflating the vent hole 332 or holes 332, 333 vents the gas in a direction away from the occupant 14. Due to the fact that the vent hole 332 or holes 332, 333 in this position in the forward chamber incorporates both the OOP function and the energy absorbing function a second vent hole is not necessary in this alternative according to figure 11 a.

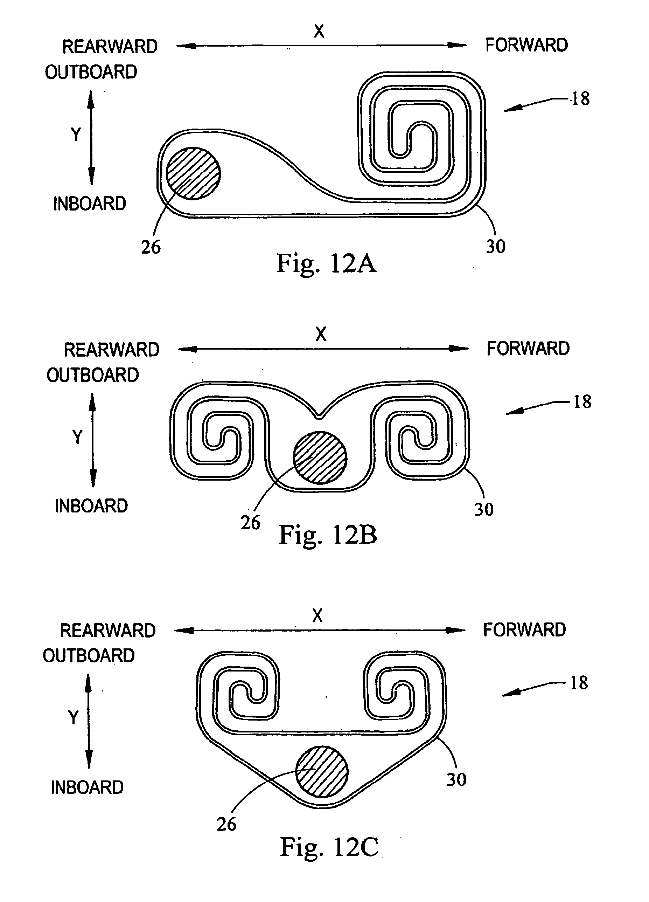

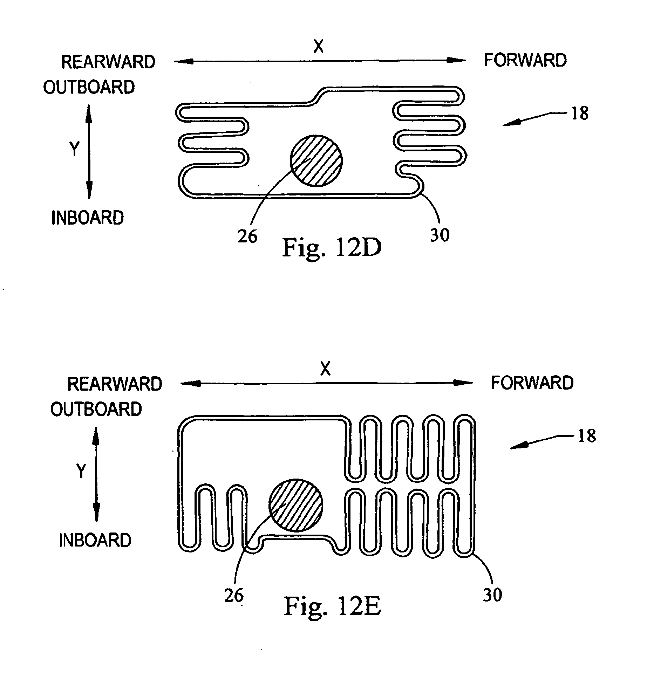

Figures 12a - 12e are plan view illustrations of various embodiments of a folded arrangement for a deflated side airbag for storage within an occupant seat in accordance with the present invention. For Figures 12a-12e, the forward and rearward directions within the occupant compartment 12 are indicated by axis X and the inboard and outboard directions are indicated by axis Y. Figure 12a is an outboard roll fold, which is rolled up from the forward edge of the airbag 18 towards the rearward edge which is proximate the inflator 26. In this folded arrangement, an OOP occupant will impede the forward expansion of the airbag 18 allowing the venting system to remain open. Figure 12b and 12c are various embodiments of a double roll fold, where both the forward and rearward edges of the airbag 18 are rolled up towards the inflator 26 such that if the forward roll is blocked by an OOP occupant, the airbag 18 will deploy more rearwardly as well as allowing the venting system to remain open. Figures 12d and 12e are Z-pattern fold arrangements, which are similar to the double roll fold arrangements illustrated in 12b and 12c. The Z-patterned fold arrangements are also preferably deployed more rearwardly for an OOP occupant as well as allowing the venting system to remain open. In at least one embodiment, the airbag 18 is stored in a folded arrangements selected from the group consisting of an outward roll fold, a double roll fold and a double Z-fold.

As a person skilled in the art will readily appreciate, the above description is meant as an illustration of implementation of the principles of this invention. This description is not intended to limit the scope or application of this invention in that the invention is susceptible to modification, variation and change, without departing from the invention, as defined in the following claims.

## Claims

1. A side airbag (18, 218, 318) for protection of an occupant of a vehicle adapted to be inflated by gas from an inflator, wherein when inflated the side airbag (18, 218, 318) positions between the occupant and a side of the vehicle, the side airbag (18, 218, 318) comprising:
a side panel (30, 230, 330) forming an exterior of the side airbag (18, 218, 318) and defining a vent hole (32, 132, 134, 232, 332, 333) for venting the gas to outside the side airbag (18, 218, 318); and
a closing panel (56, 256, 356) disposed about the vent hole (32, 132, 134, 232, 332, 333), wherein the vent hole (32, 132, 134, 232, 332, 333) is unobstructed by the closing panel (56, 256, 356) when stored in a deflated condition and the closing panel (56, 256, 356) is configured such that the vent hole (32, 132, 134, 232, 332, 333) is unobstructed to vent the gas during inflation of the side airbag (18, 218, 318) until the side airbag (18, 218, 318) is substantially fully inflated, wherein the side and closing panels (30, 230, 330, 56, 256, 356) cooperate to obstruct the vent hole (32, 132, 134, 232, 332, 333) with the closing panel (56, 256, 356) such that the gas is substantially not vented through the vent hole (32, 132, 134, 232, 332, 333), wherein, when the side airbag (18, 218, 318) is obstructed from substantially fully inflating, the vent hole (32, 132, 134, 232, 332, 333) remains unobstructed to vent the gas,
**characterized in that** the side panel (30, 230, 330) defines a further vent hole (51, 336, 351) that vents the gas to outside the side airbag (18, 218, 318) during inflation of the side airbag (18, 218, 318), wherein the further vent hole (51, 336, 351) is positioned along a periphery of the side airbag (18, 218, 318) such that, when the side airbag (18, 218, 318) is inflating, the further vent hole (51, 336, 351) vents the gas in a direction away from the occupant, wherein a tube panel (46) is disposed within the side panel (30, 230, 330), wherein sides of the tube panel (46) are joined to corresponding portions of the side panel (30, 230, 330) to form a tube (48, 348) which extends upwards generally from a bottom of the side airbag (18, 218, 318) along a rear of the side airbag (18, 218, 318) such that the side airbag (18, 218, 318) is segmented into a forward chamber (49, 349) and the tube (48, 348), a portion of the tube (48, 348) is open to receive the inflator which communicates the gas to the tube (48, 348), wherein the tube (48, 348) defines at least one opening (50a, 50b, 50c, 50d, 350) to communicate the gas to the forward chamber (49, 349), wherein the vent hole (32, 132, 134, 232, 332, 333) is disposed adjacent the tube (48, 348) and the further vent hole (51, 351) is disposed in the side panel (30, 230, 330) adjacent the forward chamber (49, 349).

2. The side airbag according to claim 1 wherein the closing panel (56, 256, 356) is joined to the side panel (30, 230, 330) at two opposed locations disposed about the vent hole (32, 132, 134, 232, 332, 333).

3. The side airbag according to one of the claims 1 or 2 wherein the closing panel (56) defines an inner hole (58, 158, 160) and the vent hole (32, 132, 134) is unobstructed when the inner hole (58, 158, 160) is aligned with the vent hole (32, 132,134).

4. The side airbag according to one of the claims 1 to 2 wherein the vent hole (32) is unobstructed when a portion of the closing panel (56) is disposed through and extends outwardly from the vent hole (32).

5. The side airbag according to one of the claims 1 to 2 wherein the closing panel (256, 356) has a stored portion (260, 360) for movement across the vent hole (232, 332, 333) and the side airbag (218, 318) further comprises a strap (270, 370) having a first end (272, 372) joined with the stored portion (260, 360) of the closing panel (256,356) and a second end (274, 374) joined to the side panel (230, 330), the second end (274, 374) operable to actuate the strap (270, 370) and move the stored portion (260, 360) of the closing panel (256, 356) across the vent hole (232, 332, 333) to obstruct the vent hole (232, 332, 333).

6. The side airbag according to claim 5 wherein the side panel (330) has a stored portion (365) and the second end (374) of the strap (370) being joined to the side panel (330) about the stored portion (365) of the side panel (330), wherein the side panel (330) is configured to move the stored portion (365) of the side panel (330) such that the second end (374) actuates the strap (370).

7. The side airbag according to claim 5 wherein the side panel (330) defines a plurality of vent holes (332, 333) and the strap (370) moves the stored portion (360) of the closing panel (356) across a portion of the vent holes (332, 333) such that at least one of the vent holes (333) is obstructed and at least another of the vent holes (332) is unobstructed.

8. The side airbag according to claim 5 wherein the strap (370) moves the stored portion (360) of the closing panel (356) across a portion of the vent hole (332) to define a smaller vent hole (336).

9. The side airbag according one of the claims 1 to 3 wherein the side panel (30) has a stored portion (60) for movement of the vent hole (32, 132, 134) relative to the closing panel (56), the stored portion (60) sewn together to form a nest seam (62), wherein the side and closing panels (30, 56) are configured to rupture the nest seam (62) and move the vent hole (32, 132, 134) relative to the closing panel (56) to obstruct the vent hole (32, 132, 134).

10. The side airbag according to one of the claims 1 to 2 and 4 to 8 wherein the closing panel (56) has a stored portion (64) for movement across the vent hole (32, 132, 134), the stored portion (64) sewn together to form a nest seam (66), wherein the side and closing panels (30, 56) are configured to rupture the nest seam (66) and move the stored portion (64) of the closing panel (56) across the vent hole (32, 132, 134) to obstruct the vent hole (32, 132, 134).

11. The side airbag according to one of the preceding claims wherein one opening (50d, 350) of the tube (48, 348) is an upper outlet opening for communicating the gas to the forward chamber (49, 349), wherein the vent hole (32, 132, 134, 232, 332, 333) is disposed adjacent to the upper outlet opening on a side of the side airbag (18, 218, 318) adjacent to the side of the vehicle when the side airbag (18, 218, 318) is inflated.

12. The side airbag according to one of the preceding claims wherein the side airbag (18, 218, 318) is stored in a folded arrangement selected from the group consisting of an outboard roll fold, a double roll fold and a double Z-fold.

13. A side airbag system for protection of an occupant of a vehicle that is mounted in a seat (16) for the occupant, the system comprising:
an inflatable side airbag according to one of the claims 1 to 12, and
an inflator (26) disposed within the side airbag (18, 218, 318) and for inflating the side airbag (18, 218, 318) with gas.

## Patentansprüche

1. Seitenairbag (18, 218, 318) zum Schutz eines Fahrzeuginsassen, der so ausgelegt ist, dass er mit Gas von einem Gasgenerator aufgeblasen wird, wobei der Seitenairbag (18, 218, 318) im aufgeblasenen Zustand zwischen dem Insassen und einer Seite des Fahrzeugs angeordnet ist, wobei der Seitenairbag (18, 218, 318) Folgendes umfasst:
eine Seitenbahn (30, 230, 330), die ein Äußeres des Seitenairbags (18, 218, 318) bildet und ein Entlüftungsloch (32, 132, 134, 232, 332, 333) zum Ablassen des Gases aus dem Seitenairbag (18, 218, 318) heraus definiert; und
eine Verschlussbahn (56, 256, 356), die um das Entlüftungsloch (32, 132, 134, 232, 332, 333) herum angeordnet ist, wobei das Entlüftungsloch (32, 132, 134, 232, 332, 333) nicht durch die Verschlussbahn (56, 256, 356) versperrt wird, wenn sie in einem abgelassenen Zustand aufbewahrt wird, und die Verschlussbahn (56, 256, 356) so eingerichtet ist, dass das Entlüftungsloch (32, 132, 134, 232, 332, 333) nicht versperrt wird, um das Gas während des Aufblasens des Seitenairbags (18, 218, 318) abzulassen, bis der Seitenairbag (18, 218, 318) im Wesentlichen vollständig aufgeblasen ist, wobei die Seiten- und Verschlussbahn (30, 230, 330, 56, 256, 356) zusammenwirken, um das Entlüftungsloch (32, 132, 134, 232, 332, 333) mit der Verschlussbahn (56, 256, 356) zu versperren, sodass das Gas im Wesentlichen nicht durch das Entlüftungsloch (32, 132, 134, 232, 332, 333) abgelassen wird, wobei, wenn der Seitenairbag (18, 218, 318) daran gehindert wird,
sich im Wesentlichen vollständig zu füllen, das Entlüftungsloch (32, 132, 134, 232, 332, 333) nicht versperrt bleibt, um das Gas abzulassen,
**dadurch gekennzeichnet, dass** die Seitenbahn (30, 230, 330) ein weiteres Entlüftungsloch (51, 336, 351) definiert, das das Gas während des Aufblasens des Seitenairbags (18, 218, 318) aus dem Seitenairbag (18, 218, 318) nach außen lässt, wobei das weitere Entlüftungsloch (51, 336, 351) entlang einem Umfang des Seitenairbags (18, 218, 318) platziert ist, sodass, wenn sich der Seitenairbag (18, 218, 318) füllt, das weitere Entlüftungsloch (51, 336, 351) das Gas in eine Richtung weg von dem Insassen ablässt, wobei eine Schlauchbahn (46) innerhalb der Seitenbahn (30, 230, 330) angeordnet ist, wobei Seiten der Schlauchbahn (46) mit entsprechenden Abschnitten der Seitenbahn (30, 230, 330) verbunden sind, um einen Schlauch (48, 348) zu bilden, der im Allgemeinen von einer Unterseite des Seitenairbags (18, 218, 318) aus entlang einer Rückseite des Seitenairbags (18, 218, 318) derart nach oben verläuft, dass der Seitenairbag (18, 218, 318) in eine vordere Kammer (49, 349) und den Schlauch (48, 348) unterteilt ist, ein Abschnitt des Schlauchs (48, 348) offen ist, um den Gasgenerator aufzunehmen, der das Gas zum Schlauch (48, 348) leitet, wobei der Schlauch (48, 348) mindestens eine Öffnung (50a, 50b, 50c, 50d, 350) definiert, um das Gas zur vorderen Kammer (49, 349) zu leiten, wobei das Entlüftungsloch (32, 132, 134, 232, 332, 333) angrenzend an den Schlauch (48, 348) angeordnet ist und das weitere Entlüftungsloch (51, 351) in der Seitenbahn (30, 230, 330) angrenzend an die vordere Kammer (49, 349) angeordnet ist.

2. Seitenairbag nach Anspruch 1, wobei die Verschlussbahn (56, 256, 356) mit der Seitenbahn (30, 230, 330) an zwei gegenüberliegenden Stellen verbunden ist, die um das Entlüftungsloch (32, 132, 134, 232, 332, 333) herum angeordnet sind.

3. Seitenairbag nach einem der Ansprüche 1 oder 2, wobei die Verschlussbahn (56) ein inneres Loch (58, 158, 160) definiert und das Entlüftungsloch (32, 132, 134) nicht versperrt ist, wenn das innere Loch (58, 158, 160) nach dem Entlüftungsloch (32, 132, 134) ausgerichtet ist.

4. Seitenairbag nach einem der Ansprüche 1 bis 2, wobei das Entlüftungsloch (32) nicht versperrt ist, wenn ein Abschnitt der Verschlussbahn (56) durch das Entlüftungsloch (32) hindurch angeordnet ist und aus ihm herausragt.

5. Seitenairbag nach einem der Ansprüche 1 bis 2, wobei die Verschlussbahn (256, 356) einen aufbewahrten Abschnitt (260, 360) zum Bewegen über das Entlüftungsloch (232, 332, 333) aufweist und der Seitenairbag (218, 318) ferner ein Band (270, 370) umfasst, das ein erstes Ende (272, 372) aufweist, das mit dem aufbewahrten Abschnitt (260, 360) der Verschlussbahn (256, 356) verbunden ist, und ein zweites Ende (274, 374), das mit der Seitenbahn (230, 330) verbunden ist, wobei das zweite Ende (274, 374) so bedienbar ist, dass es das Band (270, 370) betätigt und den aufbewahrten Abschnitt (260, 360) der Verschlussbahn (256, 356) über das Entlüftungsloch (232, 332, 333) bewegt, um das Entlüftungsloch (232, 332, 333) zu versperren.

6. Seitenairbag nach Anspruch 5, wobei die Seitenbahn (330) einen aufbewahrten Abschnitt (365) aufweist und das zweite Ende (374) des Bands (370) mit der Seitenbahn (330) um den aufbewahrten Abschnitt (365) der Seitenbahn (330) herum verbunden ist, wobei die Seitenbahn (330) so eingerichtet ist, dass sie den aufbewahrten Abschnitt (365) der Seitenbahn (330) derart bewegt, dass das zweite Ende (374) das Band (370) betätigt.

7. Seitenairbag nach Anspruch 5, wobei die Seitenbahn (330) eine Vielzahl von Entlüftungslöchern (332, 333) definiert und das Band (370) den aufbewahrten Abschnitt (360) der Verschlussbahn (356) über einen Abschnitt der Entlüftungslöcher (332, 333) derart bewegt, dass mindestens eins der Entlüftungslöcher (333) versperrt ist und mindestens ein weiteres der Entlüftungslöcher (332) nicht versperrt ist.

8. Seitenairbag nach Anspruch 5, wobei das Band (370) den aufbewahrten Abschnitt (360) der Verschlussbahn (356) über einen Abschnitt des Entlüftungslochs (332) bewegt, um ein kleineres Entlüftungsloch (336) zu definieren.

9. Seitenairbag nach einem der Ansprüche 1 bis 3, wobei die Seitenbahn (30) einen aufbewahrten Abschnitt (60) zum Bewegen des Entlüftungslochs (32, 132, 134) bezogen auf die Verschlussbahn (56) aufweist, wobei der aufbewahrte Abschnitt (60) zusammengenäht ist, um eine Bündelnaht (62) zu bilden, wobei die Seiten- und Verschlussbahn (30, 56) so eingerichtet sind, dass sie die Bündelnaht (62) aufreißen und das Entlüftungsloch (32, 132, 134) bezogen auf die Verschlussbahn (56) bewegen, um das Entlüftungsloch (32, 132, 134) zu versperren.

10. Seitenairbag nach einem der Ansprüche 1 bis 2 und 4 bis 8, wobei die Verschlussbahn (56) einen aufbewahrten Abschnitt (64) zum Bewegen über das Entlüftungsloch (32, 132, 134) aufweist, wobei der aufbewahrte Abschnitt (64) zusammengenäht ist, um eine Bündelnaht (66) zu bilden, wobei die Seiten- und Verschlussbahn (30, 56) so eingerichtet sind, dass sie die Bündelnaht (66) aufreißen und den aufbewahrten Abschnitt (64) der Verschlussbahn (56) über das Entlüftungsloch (32, 132, 134) bewegen, um das Entlüftungsloch (32, 132, 134) zu versperren.

11. Seitenairbag nach einem der vorhergehenden Ansprüche, wobei eine Öffnung (50d, 350) des Schlauchs (48, 348) eine obere Auslassöffnung ist, um das Gas zur vorderen Kammer (49, 349) zu leiten, wobei das Entlüftungsloch (32, 132, 134, 232, 332, 333) angrenzend an die obere Auslassöffnung auf einer Seite des Seitenairbags (18, 218, 318) angrenzend an die Seite des Fahrzeugs angeordnet ist, wenn der Seitenairbag (18, 218, 318) aufgeblasen ist.

12. Seitenairbag nach einem der vorhergehenden Ansprüche, wobei der Seitenairbag (18, 218, 318) in einer gefalteten Anordnung aufbewahrt ist, die aus der Gruppe bestehend aus einer nach außen gerollten Faltung, einer Doppelrollenfaltung und einer Doppel-Z-Faltung ausgewählt ist.

13. Seitenairbagsystem zum Schutz eines Fahrzeuginsassen, das in einem Sitz (16) für den Insassen eingebaut ist, wobei das System Folgendes umfasst:
einen aufblasbaren Seitenairbag nach einem der Ansprüche 1 bis 12, und
einen Gasgenerator (26), der innerhalb des Seitenairbags (18, 218, 318) angeordnet ist und zum Aufblasen des Seitenairbags (18, 218, 318) mit Gas dient.

## Revendications

1. Coussin de sécurité gonflable latéral (18, 218, 318) destiné à protéger un occupant d'un véhicule adapté pour être gonflé par du gaz d'un générateur de gaz, dans lequel quand il est gonflé, le coussin de sécurité gonflable latéral (18, 218, 318) se positionne entre l'occupant et un côté du véhicule, le coussin de sécurité gonflable latéral (18, 218, 318) comprenant :
un panneau latéral (30, 230, 330) formant un extérieur du coussin de sécurité gonflable latéral (18, 218, 318) et définissant un trou d'évent (32, 132, 134, 232, 332, 333) pour évacuer le gaz vers l'extérieur du coussin de sécurité gonflable latéral (18, 218, 318) ; et
un panneau de fermeture (56, 256, 356) disposé autour du trou d'évent (32, 132, 134, 232, 332, 333), dans lequel le trou d'évent (32, 132, 134, 232, 332, 333) est non obstrué par le panneau de fermeture (56, 256, 356) quand il est conservé dans un état dégonflé et le panneau de fermeture (56, 256, 356) est configuré de sorte que le trou d'évent (32, 132, 134, 232, 332, 333) est non obstrué pour évacuer le gaz pendant le gonflage du coussin de sécurité gonflable latéral (18, 218, 318) jusqu'à ce que le coussin de sécurité gonflable latéral (18, 218, 318) soit pratiquement complètement gonflé, dans lequel le panneau latéral et le panneau de fermeture (30, 230, 330, 56, 256, 356) coopèrent pour obstruer le trou d'évent (32, 132, 134, 232, 332, 333) avec le panneau de fermeture (56, 256, 356) de sorte que le gaz est pratiquement non évacué à travers le trou d'évent (32, 132, 134, 232, 332, 333), dans lequel, quand le coussin de sécurité gonflable latéral (18, 218, 318) est empêché de gonfler pratiquement complètement, le trou d'évent (32, 132, 134, 232, 332, 333) reste non obstrué pour évacuer le gaz,
**caractérisé en ce que** le panneau latéral (30, 230, 330) définit un autre trou d'évent (51, 336, 351) qui évacue le gaz vers l'extérieur du coussin de sécurité gonflable latéral (18, 218, 318) pendant le gonflage du coussin de sécurité gonflable latéral (18, 218, 318), dans lequel l'autre trou d'évent (51, 336, 351) est positionné le long d'une périphérie du coussin de sécurité gonflable latéral (18, 218, 318) de sorte que, quand le coussin de sécurité gonflable latéral (18, 218, 318) se gonfle, l'autre trou d'évent (51, 336, 351) évacue le gaz dans une direction éloignée de l'occupant, dans lequel un panneau tubulaire (46) est disposé à l'intérieur du panneau latéral (30, 230, 330), dans lequel des côtés du panneau tubulaire (46) sont raccordés à des parties correspondantes du panneau latéral (30, 230, 330) pour former un tube (48, 348) qui s'étend vers le haut généralement depuis un fond du coussin de sécurité gonflable latéral (18, 218, 318) le long d'une partie arrière du coussin de sécurité gonflable latéral (18, 218, 318) de sorte que le coussin de sécurité gonflable latéral (18, 218, 318) est segmenté en une chambre avant (49, 349) et le tube (48, 348), une partie du tube (48, 348) est ouverte pour recevoir le générateur de gaz qui transmet le gaz vers le tube (48, 348), dans lequel le tube (48, 348) définit au moins une ouverture (50a, 50b, 50c, 50d, 350) pour transmettre le gaz vers la chambre avant (49, 349), dans lequel le trou d'évent (32, 132, 134, 232, 332, 333) est disposé adjacent au tube (48, 348) et l'autre trou d'évent (51, 351) est disposé dans le panneau latéral (30, 230, 330) adjacent à la chambre avant (49, 349).

2. Coussin de sécurité gonflable latéral selon la revendication 1, dans lequel le panneau de fermeture (56, 256, 356) est raccordé au panneau latéral (30, 230, 330) à deux emplacements opposés disposés autour du trou d'évent (32, 132, 134, 232, 332, 333).

3. Coussin de sécurité gonflable latéral selon l'une des revendications 1 ou 2, dans lequel le panneau de fermeture (56) définit un trou intérieur (58, 158, 160) et le trou d'évent (32, 132, 134) est non obstrué quand le trou intérieur (58, 158, 160) est aligné avec le trou d'évent (32, 132, 134).

4. Coussin de sécurité gonflable latéral selon l'une des revendications 1 à 2, dans lequel le trou d'évent (32) est non obstrué quand une partie du panneau de fermeture (56) est disposée à travers et s'étend vers l'extérieur du trou d'évent (32).

5. Coussin de sécurité gonflable latéral selon l'une des revendications 1 à 2, dans lequel le panneau de fermeture (256, 356) présente une partie conservée (260, 360) pour un mouvement à travers le trou d'évent (232, 332, 333) et le coussin de sécurité gonflable latéral (218, 318) comprend en outre une bande (270, 370) présentant une première extrémité (272, 372) raccordée à la partie conservée (260, 360) du panneau de fermeture (256, 356) et une seconde extrémité (274, 374) raccordée au panneau latéral (230, 330), la seconde extrémité (274, 374) étant utilisable pour actionner la bande (270, 370) et déplacer la partie conservée (260, 360) du panneau de fermeture (256, 356) à travers le trou d'évent (232, 332, 333) pour obstruer le trou d'évent (232, 332, 333).

6. Coussin de sécurité gonflable latéral selon la revendication 5, dans lequel le panneau latéral (330) présente une partie conservée (365) et la seconde extrémité (374) de la bande (370) est raccordée au panneau latéral (330) autour de la partie conservée (365) du panneau latéral (330), dans lequel le panneau latéral (330) est configuré pour déplacer la partie conservée (365) du panneau latéral (330) de sorte que la seconde extrémité (374) actionne la bande (370).

7. Coussin de sécurité gonflable latéral selon la revendication 5, dans lequel le panneau latéral (330) définit une pluralité de trous d'évent (332, 333) et la bande (370) déplace la partie conservée (360) du panneau de fermeture (356) à travers une partie des trous d'évent (332, 333) de sorte qu'au moins l'un des trous d'évent (333) est obstrué et au moins un autre des trous d'évent (332) est non obstrué.

8. Coussin de sécurité gonflable latéral selon la revendication 5, dans lequel la bande (370) déplace la partie conservée (360) du panneau de fermeture (356) à travers une partie du trou d'évent (332) pour définir un trou d'évent plus petit (336).

9. Coussin de sécurité gonflable latéral selon l'une des revendications 1 à 3, dans lequel le panneau latéral (30) présente une partie conservée (60) pour un mouvement du trou d'évent (32, 132, 134) par rapport au panneau de fermeture (56), la partie conservée (60) étant cousue sur elle-même pour former une couture d'enveloppement (62), dans lequel le panneau latéral et le panneau de fermeture (30, 56) sont configurés pour rompre la couture d'enveloppement (62) et déplacer le trou d'évent (32, 132, 134) par rapport au panneau de fermeture (56) pour obstruer le trou d'évent (32, 132, 134).

10. Coussin de sécurité gonflable latéral selon l'une des revendications 1 à 2 et 4 à 8, dans lequel le panneau de fermeture (56) présente une partie conservée (64) pour un mouvement à travers le trou d'évent (32, 132, 134), la partie conservée (64) étant cousue sur elle-même pour former une couture d'enveloppement (66), dans lequel le panneau latéral et le panneau de fermeture (30, 56) sont configurés pour rompre la couture d'enveloppement (66) et déplacer la partie conservée (64) du panneau de fermeture (56) à travers le trou d'évent (32, 132, 134) pour obstruer le trou d'évent (32, 132, 134).

11. Coussin de sécurité gonflable latéral selon l'une des revendications précédentes, dans lequel une ouverture (50d, 350) du tube (48, 348) est une ouverture de sortie supérieure pour transmettre le gaz vers la chambre avant (49, 349), dans lequel le trou d'évent (32, 132, 134, 232, 332, 333) est disposé adjacent à l'ouverture de sortie supérieure sur un côté du coussin de sécurité gonflable latéral (18, 218, 318) adjacent au côté du véhicule quand le coussin de sécurité gonflable latéral (18, 218, 318) est gonflé.

12. Coussin de sécurité gonflable latéral selon l'une des revendications précédentes, dans lequel le coussin de sécurité gonflable latéral (18, 218, 318) est conservé en un agencement plié sélectionné dans le groupe constitué d'un pli roulé sur l'extérieur, un pli roulé double et un pli en Z double.

13. Système de coussin de sécurité gonflable latéral destiné à protéger un occupant d'un véhicule et qui est monté dans un siège (16) pour l'occupant, le système comprenant :
un coussin de sécurité gonflable latéral selon l'une des revendications 1 à 12, et
un générateur de gaz (26) disposé dans le coussin de sécurité gonflable latéral (18, 218, 318) et destiné à gonfler le coussin de sécurité gonflable latéral (18, 218, 318) avec du gaz.
